# EUROPÄISCHE PATENTANMELDUNG

(11) **EP 0 621 566 A1**
(43) Veröffentlichungstag der Anmeldung: **26.10.1994**
(21) Anmeldenummer: 94890074.1
(22) Anmeldetag: 21.04.1994
(51) Int. Cl.: G07C 9/00

(54) **Zugangskontrollsystem für Bereiche sportlicher Betätigung**

(30) Priorität: 22.04.1993 AT 791/93
(71) Anmelder: SKIDATA COMPUTER GESELLSCHAFT m.b.H., A-5083 Gartenau (AT)
(72) Erfinder: Wallerstorfer, Kurt, A-5204 Irrsdorf 130 (AT)
(74) Vertreter: Hofinger, Engelbert, DDr.

(57) **Zusammenfassung**

Ein Zugangskontrollsystem für Skigebiete, Sportanlagen od.dgl. umfaßt Ausrüstungsteilen (11,12,13) der Benützer zugeordnete Datenträger (10, 10') und diese berührungslos überprüfenden Kontrollstationen (1). Jeder Datenträger (10) ist an oder in der für die Ausübung des Sportes erforderlichen Ausrüstung, beispielsweise Ski (11) oder Skistock (12) vorgesehen, und die Kontrollstation (1) weist eine dem Boden (2) zugeordnete Antenne (5) auf.

## Beschreibung

Die Erfindung betrifft ein Zugangskontrollsystem für Bereiche sportlicher Betätigung, wie Sportanlagen, Schigebiete, od.dgl., mit mindestens einem einem Ausrüstungsteil des Benützers zugeordneten Datenträger und mit mindestens einer den Datenträger berührungslos überprüfenden Kontrollstation, sowie ein Verfahren zur Herstellung eines geeigneten Ausrüstungsteiles.

Derartige Zugangskontrollsysteme sind beispielsweise der EP-B 61 373 oder der EP-B 372 541 zu entnehmen. Die Datenträger sind dort mit einem Armband bzw. nach der EP-B 372 541 auch mit einer Ansteckklammer versehen, sodaß sie armbanduhrartig am Handgelenk oder an einem Kleidungsstück getragen werden können. Der Datenträger stellt somit einen zusätzlichen Gebrauchsgegenstand dar, der ausschließlich für die Passage der Kontrollstation erforderlich ist. Die berührungslose Datenübertragung, die per Funk, Infrarotlicht od. dgl. erfolgt, erfordert eine Begrenzung der Umgebung der Kontrollstation, um Störungen und Fehlauslösungen zu vermeiden.

Die Erfindung hat es sich nun zur Aufgabe gestellt, bei einem derartigen Zugangskontrollsystem die Mitführung des Datenträgers sicherzustellen und zu vereinfachen. Dies wird erfindungsgemäß dadurch erreicht, daß der Datenträger an einem für die Ausübung des Sportes erforderlichen Ausrüstungsteil vorgesehen ist.

Die Unterbringung des Datenträgers an einem ohnedies erforderlichen Ausrüstungsteil erübrigt seine Mitführung als zusätzlicher Gegenstand, und der Datenträger kann weder zu Hause vergessen noch verloren werden. Besonders vorteilhaft ist es, bereits bei der Fertigung den Datenträger in den Ausrüstungsteil einzusetzen, sodaß er gegen äußere Einflüsse und Beschädigungen geschützt ist. Beispiele für erforderliche Ausrüstungsteile des alpinen Skilaufes oder des Skilanglaufens, an oder in denen Datenträger vorgesehen sein können, sind etwa Ski, Skibindungen, Skistöcke, Skischuhe usw.. Für den Zutritt zu Tennisplätzen, Golfplätzen, Squashplätzen, usw. kann der Datenträger im jeweiligen Schläger, im Tennisschuh, od.dgl. vorgesehen werden.

Als Datenträger lassen sich alle geeigneten Arten verwenden. Er kann beispielsweise einen Nurlesespeicher aufweisen. Diese können einerseits Paarnummern und Fertigungsdaten für die Paarfindung und andererseits Zugangsberechtigungsdaten enthalten, die bei jeder Passage einer Kontrollstation ausgelesen werden. Enthalten die Datenträger einen Schreib-Lese-Speicher, so lassen sich bei paarweiser Verwendung eventuelle Kollisionsprobleme bei der Überprüfung durch die Kontrollstation dadurch vermeiden, daß einer der beiden Datenträger nach der Paarbildung desaktiviert wird. Dies schafft auch die Möglichkeit, bei einem auftretenden Defekt des aktiven Datenträgers den inaktiven wieder zu aktivieren.

Insbesondere ein in einen Ski eingearbeiteter Datenträger kann auch ein Display ansteuern. An diesem kann eine Laufzeit abgelesen werden, die zwischen Start und Ziel einer mit Lichtschranken und Senderempfängereinrichtungen versehenen Rennstrecke od. dgl. genommen wird.

Speziell bei der Anordnung der Datenträger in den Skiern oder Skibindungsteilen können die Datenträger auch eine Diebstahlsicherung bewirken bzw. zur Wiederauffindung nach einem Diebstahl oder Verlust verwendet werden, wenn der Besitzer erfaßt ist.

Die Datenträger können nicht nur bei der Fertigung in den Ausrüstungsteil eingearbeitet werden, sondern auch nachträglich angebracht werden: Skier können zu diesem Zweck eine verschließbare Öffnung aufweisen, an Schuhen kann der Datenträger in der Sohle eingebracht oder in anderer Weise befestigt werden, in einen Skibindungsteil (Zehenhalter, Fersenhalter, Skibremse usw.) kann der Datenträger an der Bindungsplatte, eventuell auch zwischen dieser und dem Ski vorgesehen werden, und schließlich ist bei Schlägern und Stöcken die Einbringung in einen Hohlraum denkbar.

Eine weitere, insbesondere für Schlepplifte geeignete Ausführung sieht vor, daß der Datenträger einem bodennahen Ausrüstungsteil zugeordnet ist, und die Kontrollstation eine dem Boden zugeordnete Antenne aufweist.

Die Anordnung der Antenne auf dem, gegebenenfalls auch im Boden, erleichtert bzw. erübrigt die Abschirmung des Kontrollbereiches gegen Störungen, insbesondere bei mehreren parallelen Zugangsspuren. Insbesondere Ausrüstungsteile, wie Schuhe, an denen der Datenträger immer bodennah angeordnet ist, sind naturgemäß besonders zur Verwendung mit derartigen Kontrollstationen geeignet, Die Zuordnung der Antenne zum Boden ist aber auch möglich, wenn der Ausrüstungsteil nur zum Teil Bodenberührung aufweist, wie dies bei einem Skistock oder bei nicht angeschnallten Skiern, beim Zugang zu Seilbahnen oder Sesselliften der Fall ist. Hier ist dann bevorzugt der Datenträger im Spitzen- oder Tellerbereich des Skistockes oder im hinteren Endbereich des Skis angeordnet. Ist die Kontrollstation nur mit angeschnallten Skiern passierbar, so ist die Anordnung des Datenträgers an beliebiger Stelle am oder im Ski möglich.

Eine bevorzugte Ausführung der Kontrollstation sieht vor, daß die Antenne an einem auf dem Boden liegenden Gitter, Rahmen od. dgl. angeordnet ist. Die Antenne kann beispielsweise auch an der Unterseite einer eine Gleitoberfläche aufweisenden Matte angeordnet sein.

Die Antenne kann an der Kontrollstation auch anders, beispielsweise vertikal am Drehkreuzgehäuse od.dgl. angeordnet sein. Auch dann ist die Kommunikation mit dem Datenträger im Sportgerät oder im Schuh möglich. Die Kontrollstation kann natürlich ebenso auch mit herkömmlich mitgeführten Datenträgern, etwa gemäß der eingangs genannten EP-B 372 541, kommunizieren.

Nachstehend wird nun die Erfindung anhand der Figuren der beiliegenden Zeichnung näher beschrieben, ohne darauf beschränkt zu sein.

Es zeigen:
- Fig. 1: ein zweispuriges Zugangskontrollsystem mit unterschiedlichen Kontrollstationen und verschiedenen Ausrüstungsgegenständen, und
- Fig. 2: einen mit einem Datenträger versehenen Sportschuh.

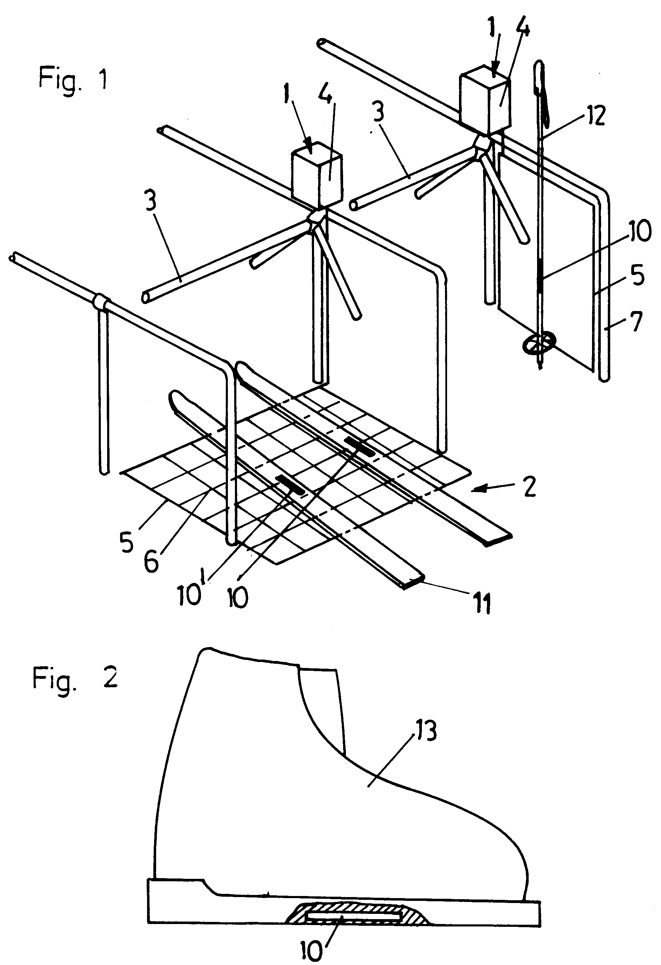

Das Zugangskontrollsystem weist eine oder mehrere der in Fig. 1 gezeigten Kontrollstationen sowie mit diesen berührungslos kommunizierende Datenträger 10 auf. Eine Kontrollstation umfaßt ein eine Zugangsspur nach einer positiven Kontrolle freigebendes Drehkreuz 3 mit einem Kontroll-, Steuer- und/oder Antriebsaggregat 4, das auf einem Gestänge oder Gestell 7 angeordnet ist. Für die berührungslose Kommunikation mit Datenträgern 10 ist die Kontrollstation mit einer Antenne 5 versehen, die in der linken Darstellung einem Gitter 6 od. dgl. zugeordnet ist, das auf den Boden 2 aufliegt oder in den Boden eingelegt ist. Die Antenne 5 kann beispielsweise auch an einer eine Gleitoberfläche für Skier 11, etwa Borsten, aufweisenden Matte vorgesehen sein. In der rechten Darstellung ist die Antenne 5 nicht direkt dem Boden 2 zugeordnet, sondern innerhalb des Gestänges 7 untergebracht, das die Antenne 5 umrahmt, deren Außenseite in geeigneter Weise geschützt und abgeschirmt ist.

Datenträger 10 können als bloße Nurlesespeicher, Transponder, Tags od. dgl. oder auch als Schreiblesechips usw. ausgebildet sein und sind in einem Ausrüstungsteil des Benutzers vorgesehen, der in dem Bereich oder Raum erforderlich ist, zu dem der Zugang überprüft wird. In Fig. 1 links ist die Anordnung eines Datenträgers 10 im Ski 11, in Fig. 1 rechts hingegen im Skistock 12 gezeigt. Fig. 2 zeigt die Anordnung in der Sohle eines Schuhs 13. Die Datenträger 10 können bei der Fertigung bereits in den Gegenstand eingearbeitet werden, wobei die Daten auch zur Kontrolle und Überwachung der Erzeugung und anschließend zur Paarfindung heranziehbar sind. Nach Ergänzung mit den den Zugang erlaubenden Daten wird die Zugangsberechtigung durch die Kontrollstation überprüft. Zusätzlich wird auch eine Diebstahlsicherung bzw. -verfolgung erleichtert, wenn die Daten des Benutzers zugeordnet und notiert sind.

Bei der Paarbildung enthält jeder der beiden Ausrüstungsteile 11, 12, 13 einen Datenträger 10. Je nach Arbeitsweise können Probleme auftreten, wenn die Datenträger des Paares in gleicher Weise reagieren. In diesem Fall wird nach der Paarbildung ein Datenträger desaktiviert, beispielsweise bei der Initialisierung, sodaß im Paar von Ausrüstungsteilen ein inaktiver Datenträger 10' vorliegt, der bei einem eventuellen Defekt des aktiven Datenträgers 10 wieder aktiviert werden kann.

## Patentansprüche

1. Zugangskontrollsystem für Bereiche sportlicher Betätigung, wie Sportanlagen, Skigebiete od.dgl. mit mindestens einem einem Ausrüstungsteil (11,12,13) des Benützer zugeordneten Datenträger (10) und mit mindestens einer den Datenträger (10) berührungslos überprüfenden Kontrollstation (1), dadurch gekennzeichnet, daß der Datenträger (10) an einem für die Ausübung des Sportes erforderlichen Ausrüstungsteil (11, 12, 13) vorgesehen ist.

2. Zugangskontrollsystem nach Anspruch 1, dadurch gekennzeichnet, daß der Datenträger im Ausrüstungsteil (11,12,13) vorgesehen ist.

3. Zugangskontrollsystem nach Anspruch 2, dadurch gekennzeichnet, daß der Datenträger (10) bei der Herstellung des Ausrüstungsteiles (11,12,13) in den Ausrüstungsteil (11,12,13) eingesetzt worden ist.

4. Zugangskontrollsystem nach Anspruch 2 oder 3, dadurch gekennzeichnet, daß der Datenträger (10) in einem Ski (11) vorgesehen ist.

5. Zugangskontrollsystem nach Anspruch 4, dadurch gekennzeichnet, daß der Datenträger (10) im hinteren Endbereich des Skis (11) vorgesehen ist.

6. Zugangskontrollsystem nach Anspruch 2 oder 3, dadurch gekennzeichnet, daß der Datenträger (10) in einem Skibindungsteil vorgesehen ist.

7. Zugangskontrollsystem nach Anspruch 2 oder 3, dadurch gekennzeichnet, daß der Datenträger (10) in einem Skistock (12) vorgesehen ist.

8. Zugangskontrollsystem nach Anspruch 7, dadurch gekennzeichnet, daß der Datenträger im Spitzenoder Tellerbereich (11) vorgesehen ist.

9. Zugangskontrollsystem nach Anspruch 2 oder 3, dadurch gekennzeichnet, daß der Datenträger (10) in einem Schuh (13) des Benützers vorgesehen ist.

10. Zugangskontrollsystem nach einem der Ansprüche 2 bis 8, dadurch gekennzeichnet, daß bei paarweisen Ausrüstungsteilen (11,12,13) jeder der beiden Ausrüstungsteile einen Datenträger (10, 10') enthält, wobei ein Datenträger (10') desaktiviert ist.

11. Zugangskontrollsystem nach einem der Ansprüche 1 bis 9, dadurch gekennzeichnet, daß der Datenträger (10) einem bodennahen Ausrüstungsteil (11,12,13) zugeordnet ist, und die Kontrollstation (1) eine dem Boden (2) zugeordnete Antenne (5) aufweist.

12. Zugangskontrollsystem nach Anspruch 11, dadurch ge-kennzeichnet, daß die Antenne (5) an einem auf dem Boden (2) liegenden Gitter, Rahmen od.dgl. (6) angeordnet ist.

13. Zugangskontrollsystem nach Anspruch 11, dadurch gekennzeichnet, daß die Antenne (5) in einem im Boden (2) verlegten Gitter, Rahmen od.dgl. (6) angeordnet ist.

14. Verfahren zur Herstellung eines für die Ausübung eines Sportes in einer zugangskontrollierten Sportanlage erforderlichen Ausrüstungsteiles (11, 12, 13), dadurch gekennzeichnet, daß in den Ausrüstungsteil (11,12,13) ein berührungslos initialisierbarer Datenträger (10) eingesetzt wird, der beim Zugang zur Sportanlage durch eine Kontrollstation (1) berührungslos überprüfbar ist.

15. Verfahren nach Anspruch 14, dadurch gekennzeichnet, daß bei paarweisen Ausrüstungsteilen jeder der beiden Teile mit einem Datenträger (10,10') versehen und ein Datenträger (10') nach der Paarbildung desaktiviert wird.

16. Verfahren nach Anspruch 15, dadurch gekennzeichnet, daß mit Hilfe der beiden Datenträger (10,10') die Paarprüfung der Ausrüstungsteile (11,1213) erfolgt.
